# EUROPÄISCHE PATENTSCHRIFT

(11) **EP 3 110 882 B1**
(45) Veröffentlichungstag und Bekanntmachung des Hinweises auf die Patenterteilung: **30.09.2020**
(21) Anmeldenummer: 15706730.7
(22) Anmeldetag: 16.02.2015
(51) Int. Cl.: B29C 48/00, B29C 48/154, C08K 5/523, C08K 5/5313, C08K 5/3492, H01B 3/30, H01B 7/295

(54) **FLAMMGESCHÜTZTES THERMOPLASTISCHES POLYURETHAN**
FLAME-RETARDANT THERMOPLASTIC POLYURETHANE
POLYURÉTHANE THERMOPLASTIQUE IGNIFUGÉ

(30) Priorität: 26.02.2014 EP 14156750
(43) Veröffentlichungstag der Anmeldung: 04.01.2017
(73) Patentinhaber: BASF SE, 67056 Ludwigshafen am Rhein (DE)
(72) Erfinder: HENZE, Oliver Steffen, 49448 Lemförde (DE); MÜHREN, Oliver, 49565 Bramsche (DE); RUDOLPH, Hans, 49152 Bad Essen Harpenfeld (DE); MÖLLER, Sabine, 32351 Stemwede/Oppenwehe (DE); LEHMANN, Aleksandra, 49356 Diepholz (DE)
(86) Internationale Anmeldenummer: PCT/EP2015/053192
(87) Internationale Veröffentlichungsnummer: WO 2015/128213

(56) Entgegenhaltungen:
- EP-A1- 2 687 534
- WO-A1-2012/076905
- DE-A1- 10 317 487

## Beschreibung

Die vorliegende Erfindung betrifft Zusammensetzungen enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure. Weiter betrifft die vorliegende Erfindung die Verwendung derartiger Zusammensetzungen zur Herstellung von Kabelummantelungen.

Aus PVC hergestellte Kabel haben den Nachteil, dass sie beim Verbrennen toxische Gase entwickeln. Daher werden Produkte auf Basis von thermoplastischen Polyurethanen entwickelt, die geringere Rauchgastoxizitäten aufweisen und gute mechanische Eigenschaften, Abriebfestigkeit sowie Flexibilität aufweisen. Wegen des nicht ausreichenden Flammverhaltens werden Zusammensetzungen auf Basis von thermoplastischen Polyurethanen entwickelt, die verschiedene Flammschutzmittel enthalten.

Flammgeschützte thermoplastische Polyurethane finden vor allem Einsatz bei der Kabelherstellung als Kabelmantel. Dabei werden häufig auch dünne Kabel mit dünnen Kabelmänteln benötigt, die sowohl die einschlägigen Flammtests bestehen (z.B. VW1) als auch ausreichende mechanische Eigenschaften aufweisen.

Dabei können den thermoplastischen Polyurethanen (TPU) sowohl halogenhaltige als auch halogenfreie Flammschutzmittel beigemischt werden. Die halogenfrei flammgeschützten thermoplastischen Polyurethane haben dabei in der Regel den Vorteil, dass sie beim Abbrennen weniger toxische und weniger korrosive Rauchgase entwickeln. Halogenfreie flammgeschützte TPU sind beispielsweise beschrieben in EP 0 617 079 A2, WO 2006/121549 A1 oder WO 03/066723 A2. Auch US 2013/0059955 A1 offenbart halogenfreie TPU-Zusammensetzungen mit Flammschutzmitteln auf Phosphatbasis.

US 2013/0081853 A1 betrifft Zusammensetzungen, vorzugsweise halogenfreie flammhemmende Zusammensetzungen, umfassend ein TPU-Polymer und ein Polyolefin sowie Flammschutzmittel auf Phosphor-Basis und weitere Zusatzstoffe. Die Zusammensetzungen weisen ausweislich der US 2013/0081853 A1 gute mechanische Eigenschaften auf.

Auch Melamincyanurat ist als Flammschutzmittel für technische Kunststoffe seit längerer Zeit bekannt. Insbesondere in Polyamiden, aber auch in Polyestern und anderen Kunststoffen, wie Styrol-basierten Polymeren, findet es breite Anwendung. So beschreibt die WO 97/00916 A Melamincyanurat in Kombination mit Wolframsäure/Wolframsäuresalzen als Flammschutzmittel für aliphatische Polyamide. EP 0 019 768 A1 offenbart die Flammfestausrüstung von Polyamiden mit einer Mischung von Melamincyanurat und rotem Phosphor.

Dabei haben ausweislich der WO 03/066723 Materialien, die nur Melamincyanurat als Flammschutzmittel enthalten, bei dünnen Wanddicken weder einen guten Sauerstoffindex (Limiting Oxygen Index, LOI) noch eine gute Flammwidrigkeit, beispielsweise bestimmt durch die Performance bei einem UL 94 Test. Auch in WO 2006/121549 A1 werden Materialien beschrieben, die als Flammschutzmittel eine Kombination aus Melaminpolyphosphat, Phosphinat und Borat enthalten. Diese Materialien erreichen zwar bei dünnen Wanddicken hohe LOI Werte, aber keine guten Ergebnisse im UL 94 Test.

Auch verschiedene thermoplastische Polyurethane sind bekannt, die als Flammschutzmittel Kombinationen aus Melamincyanurat in Verbindung mit Phosphorverbindungen enthalten. EP 0 617 079 A2 und DE 102 24 340 A1 offenbaren Materialien, die eine gute Performance im UL 94 Test (insbesondere im UL 94V Test) haben, aber gleichzeitig niedrige LOI Werte.

Beispielsweise Materialien, die als Flammschutzmittel Kombinationen von Melamincyanurat mit Phosphorsäureestern und Phosphonsäureestern enthalten, haben gute Ergebnisse in UL 94V Tests, aber sehr niedrige LOI Werte, beispielsweise < 25 %. Derartige Kombinationen von Melamincyanurat mit Phosphorsäureestern und Phosphonsäureestern sind vor allem bei Mänteln von dünnen Kabeln als Flammschutzmittel nicht ausreichend. Für verschiedene Flammschutzanwendungen ist normativ, z.B. in der DIN EN 45545, ein hoher LOI Wert gefordert.

Demgegenüber können mit Kombinationen von Melamincyanurat mit Phosphinaten sehr hohe LOI Werte (> 30 %) erreicht werden, aber keine guten Ergebnisse im UL 94V Test. Entsprechende Materialien offenbaren beispielsweise US 6,207,736 B1, US 6,255,371, US 6,365,071 B1, US 6,509,401 B1 und US 6,547,992 B1.

EP 2 687 534 A1 offenbart Polyurethanzusammensetzungen, die eine Mischung aus Poly(alkylenephosphaten), mehrere Flammschutzmittel und Hilfsmittel aufweisen.

WO 2012/076905 A1 beschreibt Polymerzusammensetzung, beispielsweise auf Basis thermoplastischer Polyurethane, enthaltend Melaminderivate und organische Phosphorverbindungen.

DE 103 17 487 A1 betrifft Zusammensetzungen enthaltend thermoplastische Polyurethane und Flammschutzmittelkombinationen, wobei als Flammschutzmittel Phosphinsäuresalze und Phosphate oder auch stickstoffhaltigen heterocyclischen Verbindung genannt werden.

WO 2014/179092 A1 offenbart eine Zusammensetzung enthaltend ein thermoplastisches Polyurethan, Melamincyanurat, ein Phosphorsäureester und ein anorganisches Aluminiumphosphinat.

Die aus dem Stand der Technik bekannten Zusammensetzungen zeigen demgemäß entweder keine ausreichenden mechanischen Eigenschaften oder weisen nur unzulängliche Flammeigenschaften, wie beispielsweise Flammwidrigkeit und Performance, im UL 94V Test auf.

Ausgehend vom Stand der Technik lag der vorliegenden Erfindung demgemäß die Aufgabe zugrunde, flammgeschützte thermoplastische Polyurethane bereitzustellen, die gute mechanische Eigenschaften aufweisen, gute Flammschutzeigenschaften zeigen und die gleichzeitig eine gute mechanische und chemische Beständigkeit aufweisen.

Erfindungsgemäß wird diese Aufgabe gelöst durch eine Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure,
wobei das phosphorhaltige Flammschutzmittel (F2) ein Phosphinat ist, und
wobei das phosphorhaltige Flammschutzmittel (F1) ein Phosphorsäureester ist,
wobei das Melamincyanurat eine Partikelgröße im Bereich von 0,1 bis 100 µm aufweist.

Die erfindungsgemäßen Zusammensetzungen enthalten mindestens ein thermoplastisches Polyurethan sowie Melamincyanurat und eine Kombination aus zwei phosphorhaltigen Flammschutzmitteln (F1) und (F2).

Es wurde überraschend gefunden, dass die erfindungsgemäßen Zusammensetzungen gegenüber den aus dem Stand der Technik bekannten Zusammensetzungen verbesserte Eigenschaften aufweisen, beispielsweise eine erhöhte Flammwidrigkeit.

Die erfindungsgemäßen Zusammensetzungen enthalten Melamincyanurat, wobei das Melamincyanurat eine Partikelgröße im Bereich von 0,1 bis 100 µm aufweist. Es hat sich überraschend gezeigt, dass die erfindungsgemäßen Zusammensetzungen durch die Kombination der erfindungsgemäßen Komponenten ein optimiertes Eigenschaftsprofil aufweisen, insbesondere für die Verwendung als Kabelummantelung.

Als Melamincyanurat im Rahmen dieser Anmeldung versteht man u. a. sämtliche handelsüblichen und kommerziell verfügbaren festen, partikelförmigen Produktqualitäten. Beispiele hierfür sind u. a. Melapur MC 25 (BASF SE) sowie Budit 315 (Budenheim).

Erfindungsgemäß wird Melamincyanurat vorzugsweise als ein 1 : 1 Salz aus Melamin und Cyanursäure eingesetzt. Dabei ist der Überschuss Melamin beispielsweise kleiner als 0,2 %, bevorzugt kleiner als 0,15 %, weiter bevorzugt kleiner als 0,1 %. Erfindungsgemäß ist der Überschuss Cyanursäure beispielsweise kleiner als 0,25 %, bevorzugt kleiner als 0,2 %, weiter bevorzugt kleiner als 0,15 %.

Im Rahmen der vorliegenden Erfindung ist es ebenfalls möglich, dass das eingesetzte Melamincyanurat behandelt ist, beispielsweise mit einer organischen Verbindung. Entsprechende Materialien sind grundsätzlich aus dem Stand der Technik bekannt.

Das erfindungsgemäß geeignete Melamincyanurat besteht aus Partikeln, die einen mittleren Teilchendurchmesser von 0,1 µm bis 100 µm aufweisen, vorzugsweise von 0,5 µm bis 60 µm, besonders bevorzugt 1 µm bis 10 µm. Dabei kann die Partikelgrößenverteilung im Rahmen der vorliegenden Erfindung monomodal oder auch multimodal, beispielsweise bimodal sein.

Melamincyanurat ist in der erfindungsgemäßen Zusammensetzung in geeigneten Mengen vorhanden. Beispielsweise ist der Anteil des Melamincyanurats in der Zusammensetzung im Bereich von 20 bis 40 Gew.-%, bezogen auf die gesamte Zusammensetzung, bevorzugt Zusammensetzung im Bereich von 25 bis 35 Gew.-%, bezogen auf die gesamte Zusammensetzung, insbesondere Zusammensetzung im Bereich von etwa 30 Gew.-%, bezogen auf die gesamte Zusammensetzung.

Gemäß einer weiteren Ausführungsform betrifft die vorliegende Erfindung daher eine Zusammensetzung wie zuvor beschrieben, wobei der Anteil des Melamincyanurats in der Zusammensetzung im Bereich von 20 bis 40 Gew.-%, bezogen auf die gesamte Zusammensetzung, liegt.

Die Summe der Komponenten der Zusammensetzung ergibt dabei jeweils 100 Gew.-%.

Die erfindungsgemäße Zusammensetzung enthält weiter mindestens ein thermoplastisches Polyurethan. Thermoplastische Polyurethane sind grundsätzlich bekannt. Die Herstellung erfolgt üblicherweise durch Umsetzung der Komponenten (a) Isocyanaten und (b) gegenüber Isocyanaten reaktiven Verbindungen und gegebenenfalls (c) Kettenverlängerungsmittel gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Im Rahmen der vorliegenden Erfindung sind prinzipiell die üblicherweise eingesetzten Isocyanaten und gegenüber Isocyanaten reaktive Verbindungen geeignet.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Besonders bevorzugt wird 4,4'-MDI eingesetzt.

Gemäß einer weiteren Ausführungsform betrifft die vorliegende Erfindung daher eine Zusammensetzung wie zuvor beschrieben, wobei das thermoplastische Polyurethan auf Diphenylmethandiisocyanat (MDI) basiert.

Als gegenüber Isocyanaten reaktive Verbindungen (b) können prinzipiell alle geeigneten dem Fachmann bekannten Verbindungen eingesetzt werden. Als gegenüber Isocyanaten reaktive Verbindung (b) wird erfindungsgemäß mindestens ein Diol eingesetzt.

Dabei können im Rahmen der vorliegenden Erfindung alle geeigneten Diole eingesetzt werden, beispielsweise Polyetherdiole oder Polyesterdiole oder Mischungen aus zwei oder mehr davon.

Grundsätzlich können erfindungsgemäß alle geeigneten Polyesterdiole eingesetzt werden, wobei im Rahmen der vorliegenden Erfindung der Begriff Polyesterdiol auch Polycarbonatdiole umfasst.

Gemäß einer Ausführungsform der vorliegenden Erfindung wird ein Polycarbonatdiol oder ein Polytetrahydrofuranpolyol eingesetzt. Geeignete Polytetrahydrofuranpolyole weisen beispielsweise ein Molekulargewicht im Bereich von 500 bis 5000 g/mol, bevorzugt 500 bis 2000 g/mol, besonders bevorzugt 800 bis 1200 g/mol, auf.

Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf 1,4-Butandiol, 1,5-Pentandiol oder 1,6-Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf 1,4-Butandiol und 1,6-Hexandiol, Polycarbonatdiole basierend auf 1,5-Pentandiol und 1,6-Hexandiol, Polycarbonatdiole basierend auf 1,6-Hexandiol, und Mischungen aus zwei oder mehr dieser Polycarbonatdiole eingesetzt.

Die erfindungsgemäßen Zusammensetzungen enthalten bevorzugt mindestens ein thermoplastisches Polyurethan ausgewählt aus der Gruppe bestehend aus auf mindestens einem Diisocyanat und mindestens einem Polycarbonatdiol basierenden thermoplastischen Polyurethanen und auf mindestens einem Diisocyanat und Polytetrahydrofuranpolyol basierenden thermoplastischen Polyurethanen. Demgemäß wird zur Herstellung der in den erfindungsgemäßen Zusammensetzungen enthaltenen Polyurethane als Komponente (b) mindestens ein Polycarbonatdiol oder ein Polytetrahydrofuranpolyol eingesetzt.

Gemäß einer weiteren Ausführungsform betrifft die vorliegende Erfindung daher eine Zusammensetzung wie zuvor beschrieben, wobei das thermoplastische Polyurethan ausgewählt ist aus der Gruppe bestehend aus auf mindestens einem Diisocyanat und mindestens einem Polycarbonatdiol basierenden thermoplastischen Polyurethanen und auf mindestens einem Diisocyanat und Polytetrahydrofuranpolyol basierenden thermoplastischen Polyurethanen.

Gemäß einer weiteren Ausführungsform betrifft die vorliegende Erfindung auch eine Zusammensetzung wie zuvor beschrieben, wobei das thermoplastische Polyurethan ein auf mindestens einem Diisocyanat und mindestens einem Polycarbonatdiol basierendes thermoplastisches Polyurethan ist. Vorzugsweise weisen die eingesetzten Polycarbonatdiole ein zahlenmittleres Molekulargewicht Mn im Bereich von 500 bis 4000 g/mol, bestimmt über GPC, bevorzugt im Bereich von 650 bis 3500 g/mol, bestimmt über GPC, besonders bevorzugt im Bereich von 800 bis 3000 g/mol, bestimmt über GPC, auf.

Weiter betrifft die vorliegende Erfindung gemäß einer weiteren Ausführungsform auch eine Zusammensetzung wie zuvor beschrieben, wobei das thermoplastische Polyurethan ein auf mindestens einem Diisocyanat und mindestens einem Polycarbonatdiol basierendes thermoplastisches Polyurethan ist und das mindestens eine Polycarbonatdiol ausgewählt ist aus der Gruppe bestehend aus Polycarbonatdiolen basierend auf 1,4-Butandiol und 1,6-Hexandiol, Polycarbonatdiolen basierend auf 1,5-Pentandiol und 1,6-Hexandiol, Polycarbonatdiolen basierend auf 1,6-Hexandiol, und Mischungen aus zwei oder mehr dieser Polycarbonatdiole. Weiter bevorzugt sind Copolycarbonatdiole basierend auf den Diolen 1,5-Pentandiol und 1,6-Hexandiol, bevorzugt mit einem Molekulargewicht Mn von ca. 2000 g/mol.

Gemäß einer weiteren Ausführungsform betrifft die vorliegende Erfindung daher eine Zusammensetzung wie zuvor beschrieben, wobei das Polycarbonatdiol ein zahlenmittleres Molekulargewicht Mn im Bereich von 500 bis 4000 g/mol, bestimmt über GPC, aufweist, bevorzugt im Bereich von 1000 bis 3500 g/mol, bestimmt über GPC, weiter bevorzugt im Bereich von 1500 bis 3000 g/mol, bestimmt über GPC.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglykol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen, ganz besonders bevorzugt ist 1,4-Butandiol.

Katalysatoren (d), welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen, wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen, in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismut-octanoat.

Die Katalysatoren (d) werden bevorzugt in Mengen von 0,0001 bis 0,1 Gew.-Teilen pro 100 Gew.-Teile der mit Isocyanaten reaktiven Verbindung (b) eingesetzt. Bevorzugt werden Zinnkatalysatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Herstellungsverfahren für thermoplastische Polyurethane werden beispielsweise offenbart in EP 0 922 552 A1, DE 101 03 424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder. Zur Einstellung von Härte der TPU können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Härte Shore A von kleiner als 95, vorzugsweise von 95 bis 80 Shore A, besonders bevorzugt etwa 85 A, können beispielsweise die im Wesentlichen difunktionellen Polyhydroxylverbindungen (b) und Kettenverlängerer (c) vorteilhafterweise in Molverhältnissen von 1 : 1 bis 1 : 5, vorzugsweise 1 : 1,5 bis 1 : 4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b) : (c) im Bereich von 1 : 5,5 bis 1 : 15, vorzugsweise von 1 : 6 bis 1 : 12, liegen, so dass die erhaltenen Mischungen aus (b) und (c) ein Hydroxyläquivalentgewicht von 110 bis 200, vorzugsweise von 120 bis 180, aufweisen.

Gemäß einer weiteren Ausführungsform betrifft die vorliegende Erfindung daher eine Zusammensetzung wie zuvor beschrieben, wobei das thermoplastische Polyurethan eine Shore Härte im Bereich von 80A bis 100A, bestimmt gemäß DIN 53505, aufweist.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

Die erfindungsgemäße Zusammensetzung enthält das mindestens eine thermoplastische Polyurethan in einer Menge im Bereich von 30 Gew.-% bis 75 Gew.-%, bezogen auf die gesamte Zusammensetzung, insbesondere im Bereich von 35 Gew.-% bis 75 Gew.-%, bezogen auf die gesamte Zusammensetzung, bevorzugt im Bereich von 40 Gew.-% bis 70 Gew.-%, weiter bevorzugt im Bereich von 45 Gew.-% bis 65 Gew.-% und besonders bevorzugt im Bereich von 50 Gew.-% bis 60 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil des thermoplastischen Polyurethans in der Zusammensetzung im Bereich von 30 Gew.-% bis 75 Gew.-%, bezogen auf die gesamte Zusammensetzung, liegt.

Dabei ergibt die Summe aller Komponenten der Zusammensetzung jeweils 100 Gew.-%.

Vorzugsweise werden erfindungsgemäß thermoplastische Polyurethane hergestellt, bei denen das thermoplastische Polyurethan ein mittleres Molekulargewicht (Mw) im Bereich von 50.000 bis 500.000 Da aufweist. Die Obergrenze für das mittlere Molekulargewicht (Mw) der thermoplastischen Polyurethane wird in aller Regel durch die Verarbeitbarkeit, wie auch das gewünschte Eigenschaftsspektrum bestimmt. Weiter bevorzugt weist das thermoplastische Polyurethan ein mittleres Molekulargewicht (M_{W}) im Bereich von 75.000 bis 400.000 Da auf, insbesondere bevorzugt im Bereich von 100.000 bis 300.000 Da.

Gemäß einer weiteren Ausführungsform betrifft die vorliegende Erfindung daher eine Zusammensetzung wie zuvor beschrieben, wobei das thermoplastische Polyurethan ein mittleres Molekulargewicht (Mw) im Bereich von 50.000 bis 500.000 Da aufweist.

Die erfindungsgemäßen Zusammensetzungen enthalten neben dem mindestens einen thermoplastischen Polyurethan sowie Melamincyanurat noch eine Kombination aus zwei phosphorhaltigen Flammschutzmitteln (F1) und (F2). Die erfindungsgemäßen Zusammensetzungen enthalten dabei mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure wobei das phosphorhaltige Flammschutzmittel (F2) ein Phosphinat ist, und wobei das phosphorhaltige Flammschutzmittel (F1) ein Phosphorsäureester ist.

Gemäß einer weiteren bevorzugten Ausführungsform ist das phosphorhaltige Flammschutzmittel (F1) bei 21 °C flüssig.

Erfindungsgemäß handelt es sich bei dem Flammschutzmittel (F1) ausgewählt aus der Gruppe bestehend aus Derivaten der Phosphorsäure und Derivaten der Phosphonsäure um organische Ester der Phosphorsäure. Organische Ester sind Derivate der phosphorhaltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden phosphorhaltigen Säure verestert.

Die vorliegende Erfindung betrifft daher eine Zusammensetzung wie zuvor beschrieben, wobei das phosphorhaltige Flammschutzmittel (F1) ein Phosphorsäureester ist.

Organische Phosphatester sind bevorzugt, besonders die Triester, der Phosphorsäure, wie Trialkylphosphate und insbesondere Triarylphosphate, wie zum Beispiel Triphenylphosphat.

Bevorzugt werden erfindungsgemäß als Flammschutzmittel für die thermoplastischen Polyurethane Phosphorsäureester der allgemeinen Formel (I) 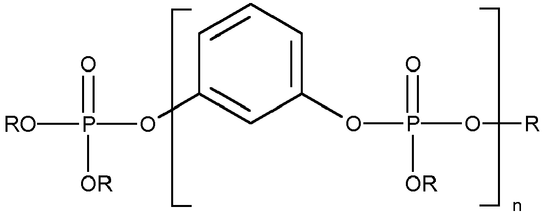 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugte phosphorhaltige Flammschutzmittel (F1) sind Bisphenol-A bis-(diphenylphosphat) (BDP), das üblicherweise als Oligomer vorliegt, und Diphenylkresylphosphat (DPK).

Demgemäß betrifft die vorliegende Erfindung gemäß einer weiteren Ausführungsform auch eine Zusammensetzung wie zuvor beschrieben, wobei das phosphorhaltige Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).

Gemäß einer weiteren Ausführungsform betrifft die vorliegende Erfindung auch eine Zusammensetzung wie zuvor beschrieben, wobei das phosphorhaltige Flammschutzmittel (F1) Resorcinol bis-diphenylphosphat (RDP) ist.

Bei den organischen Phosphonaten handelt es sich um Salze mit organischem oder anorganischem Kation oder um die Ester der Phosphonsäure. Geeignete Ester der Phosphonsäure sind die Diester von Alkyl- oder Phenylphosphonsäuren. Beispielhaft für weitere als Flammschutzmittel einzusetzenden Phosphonsäureester seien die Phosphonate der allgemeinen Formel (II) 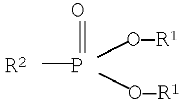 angeführt, wobei
R¹ für gegebenenfalls substituierte, Alkyl-, Cycloalkyl- oder Phenylgruppen steht, wobei die beiden Reste R¹ auch cyclisch miteinander verknüpft sein können und
R²: für einen, gegebenenfalls substituierten, Alkyl-, Cycloalkyl- oder Phenylrest steht. Besonders geeignet sind dabei cyclische Phosphonate wie z.B. 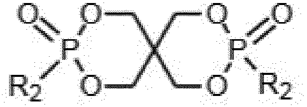 mit R² = CH₃ und C₆H₅, die sich vom Pentaerythrit ableiten, oder 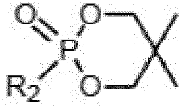 mit R² = CH₃ und C₆H₅, die sich vom Neopentylglykol ableiten, oder 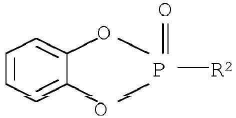 mit R² = CH₃ und C₆H₅, die sich vom Brenzkatechin ableiten, aber auch 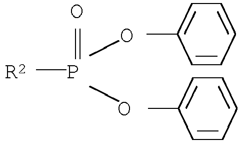 mit R² = einem unsubstituierten oder auch substituierten Phenylrest.

Der Anteil des Flammschutzmittels (F1) in der erfindungsgemäßen Zusammensetzung liegt beispielsweise im Bereich von 2 bis 15 Gew.-%, bezogen auf die gesamte Zusammensetzung, bevorzugt im Bereich von 3 bis 10 Gew.-%, bezogen auf die gesamte Zusammensetzung, insbesondere im Bereich von 5 bis 8 Gew.-%, bezogen auf die gesamte Zusammensetzung. Gemäß einer weiteren Ausführungsform betrifft die vorliegende Erfindung daher eine Zusammensetzung wie zuvor beschrieben, wobei der Anteil des Flammschutzmittels (F1) im Bereich von 2 bis 15 Gew.-%, bezogen auf die gesamte Zusammensetzung, liegt.

Erfindungsgemäß handelt es sich bei dem Flammschutzmittel (F2) ausgewählt aus Derivaten der Phosphinsäure, um ein Phosphinat. Weiterhin geeignete organische Ester sind Derivate Phosphinsäure, bei denen zumindest ein direkt an den Phosphor gebundenes Sauerstoffatom mit einem organischen Rest verestert ist. Beispielsweise handelt es sich bei dem organischen Ester um einen Alkylester, oder um einen Arylester. Beispielsweise sind alle Hydroxygruppen der Phosphinsäure verestert.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Beispielsweise ist zumindest einer der Reste aliphatisch, oder es sind alle Reste aliphatisch, weiterhin geeignet sind R¹ und R² Ethylreste. Beispielsweise ist auch R³ ein Ethylrest oder ein Methylrest. Beispielsweise sind R¹, R² und R³ gleichzeitig Ethylrest oder Methylreste.

Erfindungsgemäß werden Phosphinate eingesetzt, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Aluminium-, Calcium- oder Zinksalze, weiter bevorzugt Aluminium- oder Zinksalze. Eine bevorzugte Ausführungsform ist Diethylaluminiumphosphinat.

Gemäß einer weiteren Ausführungsform betrifft die vorliegende Erfindung daher eine Zusammensetzung wie zuvor beschrieben, wobei das Phosphinat ausgewählt ist aus der Gruppe bestehend aus Aluminiumphosphinaten oder Zinkphosphinaten.

Der Anteil des Flammschutzmittels (F2) in der erfindungsgemäßen Zusammensetzung liegt beispielsweise im Bereich von 3 bis 15 Gew.-%, bezogen auf die gesamte Zusammensetzung, insbesondere 5 bis 15 Gew.-%, bezogen auf die gesamte Zusammensetzung, bevorzugt im Bereich von 7 bis 13 Gew.-%, bezogen auf die gesamte Zusammensetzung, insbesondere im Bereich von 9 bis 11 Gew.-%, bezogen auf die gesamte Zusammensetzung.

Gemäß einer weiteren Ausführungsform betrifft die vorliegende Erfindung daher eine Zusammensetzung wie zuvor beschrieben, wobei der Anteil des Flammschutzmittels (F2) in der Zusammensetzung im Bereich von 3 bis 15 Gew.-%, bezogen auf die gesamte Zusammensetzung, liegt.

In einer Ausführungsform werden zur Herstellung der erfindungsgemäßen Zusammensetzungen thermoplastisches Polyurethan, Melamincyanurat und Flammschutzmittel (F1) und (F2) in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, Melamincyanurat und die Flammschutzmittel (F1) und (F2) eingebracht werden.

Das Vermischen des thermoplastischen Polyurethans mit den übrigen Komponenten erfolgt in einer Mischeinrichtung, die bevorzugt ein Innen-Kneter oder ein Extruder, bevorzugt ein Zweiwellenextruder, ist. In einer bevorzugten Ausführungsform ist zumindest ein in die Mischeinrichtung in dem mindestens einen weiteren Arbeitsschritt eingebrachtes Flammschutzmittel flüssig, d.h. flüssig bei einer Temperatur von 21 °C. In einer anderen bevorzugten Ausführungsform der Verwendung eines Extruders ist das eingebrachte Flammschutzmittel zumindest teilweise bei einer Temperatur flüssig, die in Fließrichtung des Füllgutes in dem Extruder hinter dem Einfüllpunkt herrscht.

Erfindungsgemäß kann die Zusammensetzung weitere Flammschutzmittel, beispielsweise auch phosphorhaltige Flammschutzmittel enthalten. Bevorzugt enthält die erfindungsgemäße Zusammensetzung jedoch neben dem Melamincyanurat und den phosphorhaltigen Flammschutzmitteln (F1) und (F2) keine weiteren Flammschutzmittel.

Durch die Kombination der verschiedenen Flammschutzmittel werden mechanische Eigenschaften und Flammschutzeigenschaften erfindungsgemäß optimiert.

Dabei liegt das Massen-Verhältnis der Summe der in der Zusammensetzung enthaltenen phosphorhaltigen Flammschutzmittel (F1) und (F2) zu dem in der Zusammensetzung enthaltenen Melamincyanurat erfindungsgemäß im Bereich von 1 : 3 bis 1 : 1, beispielsweise in einem Bereich von 1 : 2.

Demgemäß betrifft die vorliegende Erfindung gemäß einer weiteren Ausführungsform auch eine Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure, wobei
- der Anteil des thermoplastischen Polyurethans in der Zusammensetzung im Bereich von 30 bis 75 Gew.-% liegt.
- der Anteil des Melamincyanurats in der Zusammensetzung im Bereich von 20 bis 40 Gew.-% liegt,
- der Anteil des Flammschutzmittels (F2) in der Zusammensetzung im Bereich von 3 bis 15 Gew.-% liegt, und
- der Anteil des Flammschutzmittels (F1) im Bereich von 2 bis 15 Gew.-% liegt,
jeweils bezogen auf die gesamte Zusammensetzung, wobei die Summe der Komponenten der Zusammensetzung 100 Gew.-% ergibt.

Erfindungsgemäß kann die Zusammensetzung weitere Bestandteile enthalten, beispielsweise übliche Hilfs- und Zusatzstoffe für thermoplastische Polyurethane. Bevorzugt enthält die Zusammensetzung neben dem Melamincyanurat, dem mindestens einen phosphorhaltigen Flammschutzmittel (F1) und dem mindestens einen phosphorhaltigen Flammschutzmittel (F2) keine weiteren Flammschutzmittel. Weiter bevorzugt enthält die erfindungsgemäße Zusammensetzung Melamincyanurat genau ein phosphorhaltiges Flammschutzmittel (F1) ausgewählt aus der Gruppe bestehend aus Derivaten der Phosphorsäure und Derivaten der Phosphonsäure und genau ein phosphorhaltiges Flammschutzmittel (F2) ausgewählt aus der Gruppe bestehend aus Derivaten der Phosphinsäure, wobei das phosphorhaltige Flammschutzmittel (F2) ein Phosphinat ist, und wobei das phosphorhaltige Flammschutzmittel (F1) ein Phosphorsäureester ist.

Die vorliegende Erfindung betrifft auch die Verwendung der erfindungsgemäßen Zusammensetzung enthaltend mindestens ein flammgeschütztes thermoplastisches Polyurethan wie zuvor beschrieben zur Herstellung von Beschichtungen, Dämpfungselementen, Faltenbälgen, Folien oder Fasern, Formkörpern, Fußböden für Gebäude und Transport, "non woven" Gewebe, bevorzugt Dichtungen, Rollen, Schuhsohlen, Schläuchen, Kabel, Kabelstecker, Kabelummantelungen, Kissen, Laminaten, Profilen, Riemen, Sätteln, Schäumen, Steckverbindungen, Schleppkabel, Solarmodulen, Verkleidungen in Automobilen. Bevorzugt ist die Verwendung zur Herstellung von Kabelummantelungen. Die Herstellung erfolgt bevorzugt aus Granulaten, durch Spritzguss, Kalandrieren, Pulversintern, oder Extrusion und/oder durch zusätzliches Schäumen der erfindungsgemäßen Zusammensetzung.

Demgemäß betrifft die vorliegende Erfindung auch die Verwendung einer Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure wie zuvor beschrieben zur Herstellung von Kabelummantelungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure,
   wobei das phosphorhaltige Flammschutzmittel (F2) ein Phosphinat ist, und
   wobei das phosphorhaltige Flammschutzmittel (F1) ein Phosphorsäureester ist,
   wobei das Melamincyanurat eine Partikelgröße im Bereich von 0,1 bis 100 µm aufweist.
2. Zusammensetzung gemäß Ausführungsform 1, wobei das Phosphinat ausgewählt ist aus der Gruppe bestehend aus Aluminiumphosphinaten oder Zinkphosphinaten.
3. Zusammensetzung gemäß einer der Ausführungsformen 1 bis 2, wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).
4. Zusammensetzung gemäß einer der Ausführungsformen 1 bis 3, wobei das thermoplastische Polyurethan ausgewählt ist aus der Gruppe bestehend aus auf mindestens einem Diisocyanat und mindestens einem Polycarbonatdiol basierenden thermoplastischen Polyurethanen und auf mindestens einem Diisocyanat und Polytetrahydrofuranpolyol basierenden thermoplastischen Polyurethanen.
5. Zusammensetzung gemäß einer der Ausführungsformen 1 bis 4, wobei das thermoplastische Polyurethan ein mittleres Molekulargewicht (Mw) im Bereich von 50.000 bis 500.000 Da aufweist.
6. Zusammensetzung gemäß einer der Ausführungsformen 1 bis 5, wobei das thermoplastische Polyurethan auf Diphenylmethandiisocyanat (MDI) basiert.
7. Zusammensetzung gemäß einer der Ausführungsformen 1 bis 6, wobei das thermoplastische Polyurethan eine Shore Härte im Bereich von 80A bis 100A, bestimmt gemäß DIN 53505, aufweist.
8. Zusammensetzung gemäß einer der Ausführungsformen 1 bis 7, wobei der Anteil des thermoplastischen Polyurethans in der Zusammensetzung im Bereich von 30 Gew.-% bis 75 Gew.-%, bezogen auf die gesamte Zusammensetzung, liegt.
9. Zusammensetzung gemäß einer der Ausführungsformen 1 bis 8, wobei der Anteil des Melamincyanurats in der Zusammensetzung im Bereich von 20 bis 40 Gew.-%, bezogen auf die gesamte Zusammensetzung, liegt.
10. Zusammensetzung gemäß einer der Ausführungsformen 1 bis 9, wobei der Anteil des Flammschutzmittels (F2) in der Zusammensetzung im Bereich von 3 bis 15 Gew.-%, bezogen auf die gesamte Zusammensetzung, liegt.
11. Zusammensetzung gemäß einer der Ausführungsformen 1 bis 10, wobei der Anteil des Flammschutzmittels (F1) im Bereich von 2 bis 15 Gew.-%, bezogen auf die gesamte Zusammensetzung, liegt.
12. Verwendung einer Zusammensetzung gemäß einer der Ausführungsformen 1 bis 11 zur Herstellung von Kabelummantelungen.
13. Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure,
   wobei das phosphorhaltige Flammschutzmittel (F2) ein Phosphinat ist, und
   wobei das phosphorhaltige Flammschutzmittel (F1) ein Phosphorsäureester ist,
   wobei das Melamincyanurat eine Partikelgröße im Bereich von 0,1 bis 100 µm aufweist,
   wobei das Phosphinat ausgewählt ist aus der Gruppe bestehend aus Aluminiumphosphinaten oder Zinkphosphinaten, und
   wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).
14. Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure,
   wobei das phosphorhaltige Flammschutzmittel (F2) ein Phosphinat ist, und
   wobei das phosphorhaltige Flammschutzmittel (F1) ein Phosphorsäureester ist,
   wobei das Melamincyanurat eine Partikelgröße im Bereich von 0,1 bis 100 µm aufweist,
   wobei der Anteil des thermoplastischen Polyurethans in der Zusammensetzung im Bereich von 30 bis 75 Gew.-%, bezogen auf die gesamte Zusammensetzung, liegt,
   wobei der Anteil des Melamincyanurats in der Zusammensetzung im Bereich von 20 bis 40 Gew.-%, bezogen auf die gesamte Zusammensetzung, liegt,
   wobei der Anteil des Flammschutzmittels (F2) in der Zusammensetzung im Bereich von 3 bis 15 Gew.-%, bezogen auf die gesamte Zusammensetzung, liegt, und
   wobei der Anteil des Flammschutzmittels (F1) im Bereich von 2 bis 15 Gew.-%, bezogen auf die gesamte Zusammensetzung, liegt, und
   wobei die Summe der Komponenten der Zusammensetzung 100 Gew.-% ergibt.

Die nachfolgenden Beispiele dienen der Veranschaulichung der Erfindung, sind aber in keiner Weise einschränkend hinsichtlich des Gegenstands der vorliegenden Erfindung.

### BEISPIELE

Die Beispiele zeigen die verbesserte Flammfestigkeit der erfindungsgemäßen Zusammensetzungen, die guten mechanischen Eigenschaften und die geringere Rauchgasdichte.

### 1. Einsatzstoffe

Elastollan 1185A10: TPU der Shore Härte 85A der BASF Polyurethanes GmbH, Elastogranstrasse 60, 49448 Lemförde, basiert auf Polytetrahydrofuranpolyol (PTHF) mit einem Molekulargewicht von 1000, 1,4-Butandiol, MDI.

Melapur MC 15 ED: Melamincyanurat (1,3,5-Triazin-2,4,6(1H,3H,5H)-trion, Verbindung mit 1,3,5-Triazin-2,4,6-triamin (1 : 1)), CAS #: 37640-57-6, BASF SE, 67056 Ludwigshafen, GERMANY, Partikelgröße D99% </= 50 µm, D50%<= 4,5 µm, Wassergehalt % (w/w) < 0,2.

Fyrolflex RDP: Resorcinol bis (diphenyl phosphat), CAS #: 125997-21-9, Supresta Netherlands B.V., Office Park De Hoef, Hoefseweg 1, 3821 AE Amersfoort, The Netherlands, Viskosität bei 25°C = 700 mPas, Säurezahl < 0,1 mg KOH/g, Wassergehalt % (w/w) < 0,1.

Disflamoll DPK: Kresyldiphenylphosphat, CAS #: 026444-49-5, LANXESS Deutschland GmbH, 51369 Leverkusen, Deutschland, Säurezahl < 0,1 mg KOH/g, Wassergehalt % (w/w) < 0,1.

Exolit OP 1230: Aluminiumdiethylphosphinat, CAS#: 225789-38-8, Clariant Produkte (Deutschland) GmbH, Chemiepark Knapsack, 50351 Hürth, Wassergehalt % (w/w) < 0,2, Durchschnittliche Partikelgröße (D50) 20-40 µm.

### 2. Herstellung der Mischungen

In der nachfolgenden Tabelle 1 werden Zusammensetzungen aufgeführt, in denen die einzelnen Einsatzstoffe in Gewichtsanteilen (GT) angegeben sind. Die Mischungen wurden jeweils mit einem Doppelwellenextruder Typ ZE 40 A der Fa. Berstorff mit einer Verfahrensteillänge von 35 D unterteilt in 10 Gehäuse hergestellt.

**Tabelle 1**

| **Mischungen** | | | I | II | III* | IV* |
|---|---|---|---|---|---|---|
| 1185A10 | | | 55 | 55 | 60 | 59 |
| Melapur MC 15ED | | | 30 | 30 | 40 | 33 |
| Fyrolflex RDP | | | 5 | | | 8 |
| Disflamoll DPK | | | | 5 | | |
| Exolit OP 1230 | | | 10 | 10 | | |
| | | | | | | |

| **Mechanische Eigenschaften** | | | | | | |
|---|---|---|---|---|---|---|
| MFR 200°C/21,6kg | [g/10min] | DIN EN ISO 1133 | 100 | 70 | 50 | 40 |
| Dichte | [g/cm3] | DIN EN ISO 1183-1, A | 1,27 | 1,26 | 1,29 | 1,27 |
| Shore Härte | [A] | DIN 53505 | 91 | 91 | 94 | 91 |
| ZF | [MPa] | DIN EN ISO 527 | 17 | 17 | 15 | 25 |
| RD | [%] | DIN EN ISO 527 | 540 | 540 | 400 | 600 |
| WRF | [kN/m] | DIN ISO 34-1, B (b) | 65 | 58 | 60 | 65 |
| Abrieb | [mm³] | DIN ISO 4649 | 85 | 72 | 54 | 40 |

| **Flammtests** | | | | | | |
|---|---|---|---|---|---|---|
| VW1 Test durchgeführt/bestanden | | | 3/3 | 3/3 | 0/3 | 1/3 |
| UL 94V | | UL 94V, 1,6 mm | pass | pass | fail | pass |
| LOI | [%] | ISO 4589-2, 1,6mm | 30 | 30 | 24 | 23 |

| | | | | | | |
|---|---|---|---|---|---|---|
| * Vergleichsbeispiel | | | | | | |

### 3. Mechanische Eigenschaften

Die Mischungen wurden mit einem Einwellenextruder Typ Arenz mit einer Dreizonenschnecke mit Mischteil (Schneckenverhältnis1 : 3) zu Folien mit einer Dicke von 1,6 mm extrudiert. Gemessen wurden MFR der verwendeten Granulate, Dichte, Shore Härte, Zugfestigkeit, Weiterreißfestigkeit und Reißdehnung der entsprechenden Probenkörper.

### 4. Flammwidrigkeit

Um die Flammwidrigkeit zu bewerten, wird ein Probekörper mit einer Dicke von 1,6 mm gemäß UL 94V (UL Standard for Safety for Tests for Flammability of Plastic Materials for Parts in Devices and Appliances) geprüft.

Um die Flammwidrigkeit zu bewerten, wurden an einer konventionellen Extrusionslinie (Glattrohrextruder, Extruderdurchmesser 45 mm) für Kabelisolation und Kabelummantelung Kabel hergestellt. Es wurde mit einer konventionellen Dreizonenschnecke mit einem Kompressionsverhältnis von 2,5 : 1 gearbeitet.

Zunächst wurden die Adern (8 verdrillte Einzeldrähte) mit den jeweiligen Mischungen im Schlauchverfahren mit 0,1 mm der jeweiligen Mischungen isoliert. Der Durchmesser der isolierten Adern betrug 1,0 mm. Drei dieser Adern wurden verseilt und ein Mantel (Manteldicke 1mm) im Schlauchverfahren aufextrudiert. Der Außendurchmesser des gesamten Kabels betrug 5 mm.

An der Kabeln wurde dann ein VW 1 Test (UL Standard 1581, §1080 - VW-1 (vertical specimen) flame test) durchgeführt. Der Test wurde an jeweils 3 Kabeln durchgeführt.

## Patentansprüche

1. Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure,
wobei das phosphorhaltige Flammschutzmittel (F2) ein Phosphinat ist, und
wobei das phosphorhaltige Flammschutzmittel (F1) ein Phosphorsäureester ist,
wobei das Melamincyanurat eine Partikelgröße im Bereich von 0,1 bis 100 µm aufweist.

2. Zusammensetzung gemäß Anspruch 1, wobei das Phosphinat ausgewählt ist aus der Gruppe bestehend aus Aluminiumphosphinaten oder Zinkphosphinaten.

3. Zusammensetzung gemäß einem der Ansprüche 1 oder 2, wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).

4. Zusammensetzung gemäß Anspruch 1, wobei das Phosphinat ausgewählt ist aus der Gruppe bestehend aus Aluminiumphosphinaten oder Zinkphosphinaten,
wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK), und
wobei das Melamincyanurat eine Partikelgröße im Bereich von 0,1 bis 100 µm aufweist.

5. Zusammensetzung gemäß einem der Ansprüche 1 bis 4, wobei das thermoplastische Polyurethan ausgewählt ist aus der Gruppe bestehend aus auf mindestens einem Diisocyanat und mindestens einem Polycarbonatdiol basierenden thermoplastischen Polyurethanen und auf mindestens einem Diisocyanat und Polytetrahydrofuranpolyol basierenden thermoplastischen Polyurethanen.

6. Zusammensetzung gemäß einem der Ansprüche 1 bis 5, wobei das thermoplastische Polyurethan ein mittleres Molekulargewicht (Mw) im Bereich von 50.000 bis 500.000 Da aufweist.

7. Zusammensetzung gemäß einem der Ansprüche 1 bis 6, wobei das thermoplastische Polyurethan auf Diphenylmethandiisocyanat (MDI) basiert.

8. Zusammensetzung gemäß einem der Ansprüche 1 bis 7, wobei das thermoplastische Polyurethan eine Shore Härte im Bereich von 80A bis 100A, bestimmt gemäß DIN 53505, aufweist.

9. Zusammensetzung gemäß einem der Ansprüche 1 bis 8, wobei der Anteil des thermoplastischen Polyurethans in der Zusammensetzung im Bereich von 30 bis 75 Gew.-%, bezogen auf die gesamte Zusammensetzung, liegt.

10. Zusammensetzung gemäß einem der Ansprüche 1 bis 9, wobei der Anteil des Melamincyanurats in der Zusammensetzung im Bereich von 20 bis 40 Gew.-%, bezogen auf die gesamte Zusammensetzung, liegt.

11. Zusammensetzung gemäß einem der Ansprüche 1 bis 10, wobei der Anteil des Flammschutzmittels (F2) in der Zusammensetzung im Bereich von 3 bis 15 Gew.-%, bezogen auf die gesamte Zusammensetzung, liegt.

12. Zusammensetzung gemäß einem der Ansprüche 1 bis 11, wobei der Anteil des Flammschutzmittels (F1) im Bereich von 2 bis 15 Gew.-%, bezogen auf die gesamte Zusammensetzung, liegt.

13. Verwendung einer Zusammensetzung gemäß einem der Ansprüche 1 bis 12 zur Herstellung von Kabelummantelungen.

## Claims

1. A composition comprising at least one thermoplastic polyurethane, at least melamine cyanurate, at least one first phosphorus-containing flame retardant (F1) selected from the group consisting of derivatives of phosphoric acid and derivatives of phosphonic acid and at least one further phosphorus-containing flame retardant (F2) selected from the group consisting of derivatives of phosphinic acid,
wherein the phosphorus-containing flame retardant (F2) is a phosphinate, and
wherein the phosphorus-containing flame retardant (F1) is a phosphoric ester,
wherein the melamine cyanurate has a particle size in the range from 0.1 to 100 µm.

2. The composition according to claim 1, wherein the phosphinate is selected from the group consisting of aluminum phosphinates and zinc phosphinates.

3. The composition according to either of claims 1 and 2, wherein the flame retardant (F1) is selected from the group consisting of resorcinol bis(diphenyl phosphate) (RDP), bisphenol A bis(diphenyl phosphate) (BDP) and diphenyl cresyl phosphate (DPK).

4. The composition according to claim 1, wherein the phosphinate is selected from the group consisting of aluminum phosphinates and zinc phosphinates,
wherein the flame retardant (F1) is selected from the group consisting of resorcinol bis(diphenyl phosphate) (RDP), bisphenol A bis(diphenyl phosphate) (BDP) and diphenyl cresyl phosphate (DPK), and
wherein the melamine cyanurate has a particle size in the range from 0.1 to 100 µm.

5. The composition according to any of claims 1 to 4, wherein the thermoplastic polyurethane is selected from the group consisting of thermoplastic polyurethanes based on at least one diisocyanate and at least one polycarbonatediol, and thermoplastic polyurethanes based on at least one diisocyanate and polytetrahydrofuran polyol.

6. The composition according to any of claims 1 to 5, wherein the thermoplastic polyurethane has a mean molecular weight (M_{W}) in the range from 50 000 to 500 000 Da.

7. The composition according to any of claims 1 to 6, wherein the thermoplastic polyurethane is based on diphenylmethane diisocyanate (MDI).

8. The composition according to any of claims 1 to 7, wherein the thermoplastic polyurethane has a Shore hardness in the range from 80 A to 100 A, determined in accordance with DIN 53505.

9. The composition according to any of claims 1 to 8, wherein the proportion of the thermoplastic polyurethane in the composition is in the range from 30% to 75% by weight based on the overall composition.

10. The composition according to any of claims 1 to 9, wherein the proportion of the melamine cyanurate in the composition is in the range from 20% to 40% by weight based on the overall composition.

11. The composition according to any of claims 1 to 10, wherein the proportion of the flame retardant (F2) in the composition is in the range from 3% to 15% by weight based on the overall composition.

12. The composition according to any of claims 1 to 11, wherein the proportion of the flame retardant (F1) is in the range from 2% to 15% by weight based on the overall composition.

13. The use of a composition according to any of claims 1 to 12 for production of cable sheaths.

## Revendications

1. Composition contenant au moins un polyuréthane thermoplastique, au moins du cyanurate de mélamine, au moins un premier agent ignifuge contenant du phosphore (F1) choisi dans le groupe constitué par les dérivés de l'acide phosphorique et les dérivés de l'acide phosphonique et au moins un autre agent ignifuge contenant du phosphore (F2) choisi dans le groupe constitué par les dérivés de l'acide phosphinique,
dans laquelle l'agent ignifuge contenant du phosphore (F2) est un phosphinate, et
dans laquelle l'agent ignifuge contenant du phosphore (F1) est un ester de l'acide phosphorique,
dans laquelle le cyanurate de mélamine présente une taille de particule dans la plage allant de 0,1 à 100 µm.

2. Composition selon la revendication 1, dans laquelle le phosphinate est choisi dans le groupe constitué par les phosphinates d'aluminium ou les phosphinates de zinc.

3. Composition selon l'une quelconque des revendications 1 ou 2, dans laquelle l'agent ignifuge (F1) est choisi dans le groupe constitué par le bis-diphénylphosphate de résorcinol (RDP), le bis-(diphénylphosphate) de bisphénol A (BDP) et le phosphate de diphénylcrésyle (DPK).

4. Composition selon la revendication 1, dans laquelle le phosphinate est choisi dans le groupe constitué par les phosphinates d'aluminium ou les phosphinates de zinc,
dans laquelle l'agent ignifuge (F1) est choisi dans le groupe constitué par le bis-diphénylphosphate de résorcinol (RDP), le bis-(diphénylphosphate) de bisphénol A (BDP) et le phosphate de diphénylcrésyle (DPK), et
dans laquelle le cyanurate de mélamine présente une taille de particule dans la plage allant de 0,1 à 100 µm.

5. Composition selon l'une quelconque des revendications 1 à 4, dans laquelle le polyuréthane thermoplastique est choisi dans le groupe constitué par les polyuréthanes thermoplastiques à base d'au moins un diisocyanate et d'au moins un polycarbonate-diol et les polyuréthanes thermoplastiques à base d'au moins un diisocyanate et de polytétrahydrofurane-polyol.

6. Composition selon l'une quelconque des revendications 1 à 5, dans laquelle le polyuréthane thermoplastique présente un poids moléculaire moyen (M_{W}) dans la plage allant de 50 000 à 500 000 Da.

7. Composition selon l'une quelconque des revendications 1 à 6, dans laquelle le polyuréthane thermoplastique est à base de diisocyanate de diphénylméthane (MDI).

8. Composition selon l'une quelconque des revendications 1 à 7, dans laquelle le polyuréthane thermoplastique présente une dureté Shore dans la plage allant de 80A à 100A, déterminée selon DIN 53505.

9. Composition selon l'une quelconque des revendications 1 à 8, dans laquelle la proportion du polyuréthane thermoplastique dans la composition se situe dans la plage allant de 30 à 75 % en poids, par rapport à la composition totale.

10. Composition selon l'une quelconque des revendications 1 à 9, dans laquelle la proportion du cyanurate de mélamine dans la composition se situe dans la plage allant de 20 à 40 % en poids, par rapport à la composition totale.

11. Composition selon l'une quelconque des revendications 1 à 10, dans laquelle la proportion de l'agent ignifuge (F2) dans la composition se situe dans la plage allant de 3 à 15 % en poids, par rapport à la composition totale.

12. Composition selon l'une quelconque des revendications 1 à 11, dans laquelle la proportion de l'agent ignifuge (F1) se situe dans la plage allant de 2 à 15 % en poids, par rapport à la composition totale.

13. Utilisation d'une composition selon l'une quelconque des revendications 1 à 12 pour la fabrication de gainages de câbles.
